# EUROPÄISCHE PATENTANMELDUNG

(11) **EP 4 607 300 A1**
(43) Veröffentlichungstag der Anmeldung: **27.08.2025**
(21) Anmeldenummer: 25157423.2
(22) Anmeldetag: 12.02.2025
(51) Int. Cl.: G05B 19/401

(54) **WERKZEUG-EINSTELL- UND/ODER WERKZEUG-MESSSYSTEM, WERKZEUG- EINSTELL- UND/ODER WERKZEUG-MESSVERFAHREN, COMPUTERPROGRAMMPRODUKT UND STEUER- UND/ODER REGELEINHEIT**

(30) Priorität: 21.02.2024 DE 102024104907
(71) Anmelder: E. Zoller GmbH & Co. KG Einstell- und Messgeräte, 74385 Pleidelsheim (DE)
(72) Erfinder: Pfau, Christian, 74379 Ingersheim (DE); Mansoory K., Ali M., 74385 Pleidelsheim (DE)
(74) Vertreter: Daub, Thomas

(57) **Zusammenfassung**

Die Erfindung geht aus von einem Werkzeug-Einstell- und/oder Werkzeug-Messsystem (16), mit einem optischen Werkzeug-Einstell- und/oder Werkzeug-Messgerät (10), mit zumindest einer Kamera (12), welche zumindest dazu vorgesehen ist, Kameraaufnahmen von einem Werkzeug-Einstell- und/oder Werkzeug-Messbereich (14) des Werkzeug-Einstell- und/oder Werkzeug-Messgeräts (10) und/oder von einem Werkzeug-Einlager-, Werkzeug-Auslager- oder Werkzeug-Zwischenlager-Bereich des Werkzeug-Einstell- und/oder Werkzeug-Messsystems (16) aufzunehmen, und mit einer, insbesondere externen oder internen, Steuer- und/oder Regeleinheit (18), welche zumindest dazu vorgesehen ist, die Kameraaufnahmen zumindest temporär abzuspeichern und auszuwerten.

Es wird vorgeschlagen, dass die Steuer- und/oder Regeleinheit (18) einen trainierten Algorithmus maschinellen Lernens umfasst, welcher zumindest dazu vorgesehen ist, anhand der ausgewerteten Kameraaufnahmen eine Koordinatenerkennung zu bewerkstelligen, welche eine Erkennung von Werkzeugen (20), Werkzeugfuttern (22), Komplettwerkzeugen und/oder Werkzeug- und/oder Werkzeugfutterpaletten (24) und eine Bestimmung derer Koordinaten in einem fixen Koordinatensystem umfasst.

## Beschreibung

### Stand der Technik

Die Erfindung betrifft ein Werkzeug-Einstell- und/oder Werkzeug-Messsystem nach dem Oberbegriff des Anspruchs 1, ein Werkzeug-Einstell- und/oder Werkzeug-Messverfahren nach dem Oberbegriff des Anspruchs 20, ein Computerprogrammprodukt nach dem Anspruch 21 und eine Steuer- und/oder Regeleinheit nach dem Anspruch 22.

Es ist bereits ein Werkzeug-Messsystem, mit einem optischen Werkzeug-Einstell- und/oder Werkzeug-Messgerät, mit zumindest einer Kamera, welche zumindest dazu vorgesehen ist, Kameraaufnahmen von einem Werkzeug-Messbereich des Werkzeug-Messgeräts und/oder von einem Werkzeug-Einlager-, Werkzeug-Auslager- oder Werkzeug-Zwischenlager-Bereich des Werkzeug-Messsystems aufzunehmen und mit einer, insbesondere externen oder internen, Steuer- und/oder Regeleinheit, welche zumindest dazu vorgesehen ist, die Kameraaufnahmen zumindest temporär abzuspeichern und auszuwerten, vorgeschlagen worden.

Die Aufgabe der Erfindung besteht insbesondere darin, ein gattungsgemäßes System mit vorteilhaften Betriebseigenschaften bereitzustellen. Die Aufgabe wird erfindungsgemäß durch die Merkmale der unabhängigen Patentansprüche gelöst, während vorteilhafte Ausgestaltungen und Weiterbildungen der Erfindung den Unteransprüchen entnommen werden können.

### Vorteile der Erfindung

Die Erfindung geht aus von einem Werkzeug-Einstell- und/oder Werkzeug-Messsystem, mit einem optischen Werkzeug-Einstell- und/oder Werkzeug-Messgerät, mit zumindest einer Kamera, welche zumindest dazu vorgesehen ist, Kameraaufnahmen von einem Werkzeug-Einstell- und/oder Werkzeug-Messbereich des Werkzeug-Einstell- und/oder Werkzeug-Messgeräts und/oder von einem Werkzeug-Einlager-, Werkzeug-Auslager- oder Werkzeug-Zwischenlager-Bereich des Werkzeug-Einstell- und/oder Werkzeug-Messsystems aufzunehmen, und mit einer, insbesondere externen oder internen, Steuer- und/oder Regeleinheit, welche zumindest dazu vorgesehen ist, die Kameraaufnahmen zumindest temporär abzuspeichern und auszuwerten.

Es wird vorgeschlagen, dass die Steuer- und/oder Regeleinheit einen trainierten Algorithmus maschinellen Lernens umfasst, welcher zumindest dazu vorgesehen ist, anhand der ausgewerteten Kameraaufnahmen eine Koordinatenerkennung zu bewerkstelligen, welche eine Erkennung von Werkzeugen, Werkzeugfuttern, Komplettwerkzeugen und/oder Werkzeug- und/oder Werkzeugfutterpaletten und eine Bestimmung derer Koordinaten in einem fixen Koordinatensystem umfasst. Dadurch können vorteilhafte Betriebseigenschaften für das Werkzeug-Einstell- und/oder Werkzeug-Messsystem erreicht werden. Vorteilhaft kann eine Betriebssicherheit erhöht werden. Vorteilhaft kann eine Betriebseffizienz erhöht werden. Vorteilhaft kann eine Geschwindigkeit des Werkzeug-Einstell- und/oder Werkzeug-Messsystems erhöht werden. Vorteilhaft können Betriebskosten gesenkt werden. Der Algorithmus maschinellen Lernens ist vorzugsweise ein auf eine Erkennung von Objekten aus Kameraaufnahmen spezialisierter Algorithmus maschinellen Lernens.

Das Werkzeug-Einstell- und/oder Werkzeug-Messsystem kann als ein alleiniges Werkzeug-Messsystem, beispielsweise ein "coraMeasure LG" System des Modelljahrs 2023 der Firma E. ZOLLER GmbH & Co. KG Einstell- und Messgeräte (Pleidelsheim, Deutschland), als ein alleiniges Werkzeug-Einstellsystem oder als ein Werkzeug-Einstell- und Werkzeug-Messsystem, beispielsweise ein "roboBox" System des Modelljahrs 2023 der Firma E. ZOLLER GmbH & Co. KG Einstell- und Messgeräte (Pleidelsheim, Deutschland), ausgebildet sein. Insbesondere ist ein alleiniges Werkzeug-Messsystem als ein Standalone-Werkzeug-Messsystem zu einem Vermessen von Werkzeugen für den Einsatz in Werkzeugmaschinen ausgebildet, welches vorzugsweise getrennt und unabhängig von der Werkzeugmaschine ist. Insbesondere umfasst das Standalone-Werkzeug-Messsystem ein optisches Werkzeug-Messgerät. Insbesondere ist ein alleiniges Werkzeug-Einstellsystem als ein Standalone-Werkzeug-Einstellsystem zu einem Einstellen, z.B. Längeneinstellen, von Werkzeugen für den Einsatz in Werkzeugmaschinen ausgebildet, welches vorzugsweise getrennt und unabhängig von der Werkzeugmaschine ist. Insbesondere umfasst das Standalone-Werkzeug-Einstellsystem ein Werkzeug-Einstellgerät. Insbesondere umfasst ein Werkzeug-Einstell- und Werkzeug-Messsystem unter anderem auch ein Werkzeug-Messsystem. Insbesondere umfasst ein Werkzeug-Einstell- und Werkzeug-Messsystem unter anderem auch ein Werkzeug-Einstellsystem. Die Kamera ist insbesondere als eine Auflichtkamera ausgebildet. Die Kamera kann Teil eines Kamerasystems aus schaltbarer Beleuchtung und Kamerasensor sein. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Werkzeug-Einstell- und/oder Werkzeug-Messgerät" soll insbesondere ein Gerät verstanden werden, welches zumindest dazu vorgesehen ist, zumindest eine Länge, zumindest einen Winkel, zumindest eine Kontur und/oder zumindest eine Außenform eines Werkzeugs zumindest teilweise zu erfassen und/oder das Werkzeug in einem Werkzeugfutter einzustellen. Vorzugsweise weist das Werkzeug-Einstell- und/oder Werkzeug-Messgerät eine Einstell- und/oder Messpräzision im Bereich von Mikrometern oder darunter auf.

Ein Werkzeug-Einstell- und/oder Werkzeug-Messbereich des Werkzeug-Einstell- und/oder Werkzeug-Messgeräts ist insbesondere als ein Bereich ausgebildet, in welchem das Werkzeug bei einer Ausführung einer Hauptfunktion, beispielsweise einer Werkzeugvermessungsfunktion oder einer Werkzeugeinstellfunktion, des Werkzeug-Einstell- und/oder Werkzeug-Messgeräts positioniert ist. Ein Werkzeug-Einlager-Bereich ist insbesondere als ein Bereich ausgebildet, in dem ein Werkzeug vor Durchführung der Hauptfunktion des Werkzeug-Einstell- und/oder Werkzeug-Messgeräts angeordnet ist und vorzugsweise für die Durchführung der Hauptfunktion des Werkzeug-Einstell- und/oder Werkzeug-Messgeräts vorgehalten wird. Ein Werkzeug-Auslager-Bereich ist insbesondere als ein Bereich ausgebildet, in dem ein Werkzeug nach Durchführung der Hauptfunktion des Werkzeug-Einstell- und/oder Werkzeug-Messgeräts angeordnet ist und vorzugsweise nach der Durchführung der Hauptfunktion des Werkzeug-Einstell- und/oder Werkzeug-Messgeräts für einen Weitertransport vorgehalten wird. Ein Werkzeug-Zwischenlager-Bereich ist insbesondere als ein Bereich ausgebildet, in dem ein Werkzeug während verschiedenen Schritten eines Betriebs des Werkzeug-Einstell- und/oder Werkzeug-Messgeräts angeordnet ist und vorzugsweise für weitere noch folgende Mess- und/oder Einstellschritte des Betriebs des Werkzeug-Einstell- und/oder Werkzeug-Messgeräts vorgehalten wird. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit, insbesondere einem Prozessor, und mit einer Speichereinheit, insbesondere einem Datenspeicher, sowie mit einem in der Speichereinheit gespeicherten Betriebsprogramm verstanden werden. Vorzugsweise ist die Steuer- und/oder Regeleinheit ein Rechner. Insbesondere ist die Speichereinheit zumindest dazu vorgesehen, die Kameraaufnahmen temporär oder permanent abzuspeichern. Insbesondere ist die Prozessoreinheit zumindest dazu vorgesehen, die Auswertung der abgespeicherten Kameraaufnahmen vorzunehmen. Die Steuer- und/oder Regeleinheit kann Teil des Werkzeug-Einstell- und/oder Werkzeug-Messsystems, insbesondere einer Komponente des Werkzeug-Einstell- und/oder Werkzeug-Messsystems wie zum Beispiel dem Werkzeug-Einstell- und/oder Werkzeug-Messgerät sein. Alternativ oder zusätzlich kann zumindest ein Teil der Steuer- und/oder Regeleinheit oder die gesamte Steuer- und/oder Regeleinheit extern, also beispielsweise in einer Cloud oder in einem externen Rechenzentrum, angeordnet sein, wobei vorzugsweise eine Kommunikationsverbindung zu Komponenten des Werkzeug-Einstell- und/oder Werkzeug-Messsystems, wie einem Handhabungs-Industrieroboter, der Kamera oder dem Werkzeug-Einstell- und/oder Werkzeug-Messgerät besteht.

Der Algorithmus maschinellen Lernens wendet vorzugsweise bekannte Deep-Learning-Techniken an. Der Algorithmus maschinellen Lernens ist vorzugsweise speziell auf die Erkennung von Werkzeugen, insbesondere aus einer festgelegten Gruppe von Werkzeugen, von Werkzeugfuttern, insbesondere aus einer festgelegten Gruppe von Werkzeugfuttern, von montierten Komplettwerkzeugen, insbesondere aus einer festgelegten Gruppe von montierten Komplettwerkzeugen und/oder von Werkzeug- und/oder Werkzeugfutterpaletten, insbesondere aus einer festgelegten Gruppe von Werkzeug- und/oder Werkzeugfutterpaletten, trainiert. Der Algorithmus maschinellen Lernens ist vorzugsweise ein auf eine Erkennung von Objekten aus Kameraaufnahmen spezialisierter Algorithmus maschinellen Lernens. Die Objekterkennung aus Bildern ist eine der Paradedisziplinen maschinellen Lernens, so dass das Training und/oder die Anwendung entsprechender Algorithmen maschinellen Lernens im Bereich des Fachwissens des Fachmanns liegt (siehe u.a. https://en.wikipedia.org/wiki/Outline_of_object_recognition, Stand: Revision vom 30.10.2023 - 12:14Uhr).

Wenn der, insbesondere auf einer Anwendung einer Deep-Learning-Technik basierende, trainierte Algorithmus maschinellen Lernens ein CNN (Convolutional Neural Network)-Algorithmus (faltendes neuronales Netz) ist, können insbesondere Vorteile bei einer Verarbeitung größerer Datenmengen im Zuge der Objekterkennung anhand der Kameraaufnahmen erreicht werden. Zudem können dadurch auch Vorteile bei einer Objekterkennung von suboptimalen Kameraaufnahmen, die Bildverzerrungen und/oder unterschiedliche Beleuchtungsverhältnisse aufweisen, erreicht werden. Außerdem kann ein Speicherplatzbedarf im Vergleich zu anderen neuronalen Netzen vorteilhaft gering gehalten werden. Beispielsweise kann einer der in den folgenden Veröffentlichungen beschriebenen bekannten CNN-Algorithmen in dem Werkzeugidentifikationsverfahren eingesetzt werden: a) AlexNet: Alex Krizhevsky, Imagenet classification with deep convolutional neural networks, Communications of the ACM 60.6, pg. 84-90 (2017); b) MobileNet: Andrew G. Howard, MobileNets: Efficient Convolutional Neural Networks for Mobile Vision Applications, CoRR, abs/1704.04861, (2017); c) Xception : Francois Chollet, Xception: Deep Learning with Depthwise Separable Convolutions, CoRR, abs/1610.02357, (2016); d) LeCun Y, Bengio Y, Hinton G (2015) Deep learning; Nature 521 :436{444, DOI 10.1038/naturel4539; e) Lin H, Li B, Wang X, Shu Y, Niu S (2019); Automated defect inspection of LED chip using deep convolutional neural network; J Intell Manuf; 30:2525{2534, DOI 10.1007/sl0845-018-1415-x; f) Fu G, Sun P, Zhu W, Yang J, Cao Y, Yang MY, Cao Y (2019); A deep-learning-based approach for fast and robust steel surface defects classification; Opt Laser Eng 121:397{405, DOI 10.1016/j.optlaseng.2019.05.005; g) Lee KB, Cheon S, Kim CO (2017) A Convolutional Neural Network for Fault Classification and Diagnosis in Semiconductor Manufacturing Processes; IEEE T Semiconduct M 30: 135{142, DOI 10.1109/TSM.2017.2676245; h) Goncalves DA, Stemmer MR, Pereira M (2020) A convolutional neural network approach on bead geometry estimation for a laser cladding system; Int J Adv Manuf Tech 106:1811 {1821, DOI 10.1007/s00170-019-04669-z; i) Karatas A, Kölsch D, Schmidt S, Eier M, Seewig J (2019) Development of a convolutional autoencoder using deep neuronal networks for defect detection and generating ideal references for cutting edges; Munich, Germany, DOI 10.1117/12.2525882; j) Stahl J, Jauch C (2019) Quick roughness evaluation of cut edges using a convolutional neural network; In: Proceedings SPIE 11172, Munich, Germany, DOI 10.1117/12.2519440; oder k) ein CNN des unter dem Namen "TensorFlow" bekannten Open Source Frameworks. Alternative CNN-Algorithmen, die dem Fachmann bekannt sind, wie z.B. Region Proposals (R-CNN, Fast R-CNN, Faster R-CNN), Detectron, Single Shot MultiBox Detector (SSD) oder You Only Look Once (YOLO, beispielsweise in der zum Anmeldezeitpunkt lizenzierbaren Versionsnummer 8), etc. sind selbstverständlich ebenfalls denkbar. Zur Anwendung vieler dieser Algorithmen maschinellen Lernens sind einfache Open-Source-Lösungen verfügbar (vgl. Der oben bereits referenzierte Artikel aus dem Online-Lexikon "Wikipedia"). Insbesondere wird der trainierte Algorithmus maschinellen Lernens von der Prozessoreinheit der Steuer- und/oder Regeleinheit ausgeführt. Insbesondere ist der trainierte Algorithmus maschinellen Lernens auf der Speichereinheit der Steuer- und/oder Regeleinheit abgespeichert. Die Steuer- und/oder Regeleinheit umfasst insbesondere einen Informationseingang zum Empfang der Kameraaufnahmen, eine Informationsverarbeitung zur Analyse der Kameraaufnahmen und eine Informationsausgabe zumindest zu einer Ausgabe von auf den Ergebnissen der Auswertung basierenden Steuer- und/oder Regelbefehlen an weitere Komponenten des Werkzeug-Einstell- und/oder Werkzeug-Messsystems, wie dem Handhabungs-Industrieroboter oder dem Werkzeug-Einstell- und/oder Werkzeug-Messgerät, etc.. Vorteilhaft weist die Steuer- und/oder Regeleinheit zusätzlich zumindest Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Steuer- und/oder Regeleinheit auf einer gemeinsamen Platine angeordnet und/oder vorteilhaft in einem gemeinsamen Gehäuse angeordnet. Alternativ kann die Steuer- und/oder Regeleinheit jedoch auch als eine verteilte Recheneinheit, wie z.B. eine Cloud ausgebildet sein. Insbesondere umfasst der trainierte Algorithmus maschinellen Lernens einen Objektklassifizierungsalgorithmus.

Der Algorithmus maschinellen Lernens kann zudem zur Bestimmung der Koordinaten der erkannten Objekte vorgesehen sein. Vorzugsweise ist der Algorithmus maschinellen Lernens (vergleichbar zu dem oben beschriebenen Training der Objekterkennung) dazu trainiert, anhand der erkannten Objekttypen im Zusammenspiel mit den Kameraaufnahmen die Koordinaten der erkannten Objekte zu ermitteln. Alternativ kann jedoch die Bestimmung der Koordinaten der erkannten Objekte in dem fixen Koordinatensystem mittels mathematischer Berechnungen aus den Dimensionen des erkannten Objekts in dem Kamerabild oder einer Kombination mehrerer aus unterschiedlichen Positionen aufgenommener Kamerabilder erfolgen. Dazu ist der Steuer- und/oder Regeleinheit eine exakte Position und/oder Relativposition des erkannten Objekts bekannt, z.B. über einen kalibrierten Abstand der Kamera zu dem Werkzeug-Einstell- und/oder Werkzeug-Messbereich, dem Werkzeug-Einlager-Bereich, dem Werkzeug-Auslager-Bereich und/oder dem Werkzeug-Zwischenlager-Bereich. Ein Komplettwerkzeug umfasst insbesondere eine speziell aufeinander abgestimmte und/oder zusammengehörige Kombination von Werkzeugfutter und Werkzeug, die insbesondere demontierbar ist. Eine Werkzeug- und/oder Werkzeugfutterpalette ist insbesondere als eine ebene Halteeinrichtung und/oder Lagereinrichtung zur Halterung und/oder Lagerung von Werkzeugen und/oder Werkzeugfuttern ausgebildet, welche vorzugsweise eine Mehrzahl an Spalten und/oder Reihen von Aufnahmeplätzen für Werkzeuge und/oder Werkzeugfutter umfasst. Die Werkzeuge sind insbesondere als Schaftwerkzeuge, vorzugsweise als Rotations-Schaftwerkzeuge, beispielsweise Bohrer, Fräser, Profilwerkzeuge und/oder Reibahlen ausgebildet, wobei vorzugsweise ein Schaft der Schaftwerkzeuge zu einer Montage in einer Werkzeugaufnahme vorgesehen ist. Unter einem "Werkzeugfutter" soll insbesondere ein Bauteil verstanden werden, welches zu einer Aufnahme eines Werkzeugs und einer Verbindung des Werkzeugs mit einer Maschine vorgesehen ist. Insbesondere ist das Werkzeugfutter als eine Schnittstelle zwischen Werkzeug und Maschine ausgebildet. Beispielsweise ist das Werkzeugfutter als ein Schrumpfspannfutter, als ein Hydrodehnfutter, als ein Pressspannfutter, als ein Spannzangenfutter oder dergleichen, ausgebildet. Das fixe Koordinatensystem kann beispielsweise ein Koordinatensystem eines Handhabungs-Industrieroboters des Werkzeug-Einstell- und/oder Werkzeug-Messsystems sein.

Wenn die Kamera eine Messkamera, insbesondere Auflichtmesskamera, des Werkzeug-Einstell- und/oder Werkzeug-Messgeräts ist, kann vorteilhaft eine hohe Effizienz erreicht werden. Vorteilhaft können Kosten und/oder Bauteilzahlen gering gehalten werden. Vorteilhaft kann eine einfache Konstruktion erreicht werden. Vorteilhaft kann einer bereits vorhandenen Komponente eine weitere Funktion zugewiesen werden. Insbesondere ist die Messkamera von einer Durchlichtkamera, insbesondere einer Durchlichtmesskamera eines Werkzeug-Einstell- und/oder Werkzeug-Messgeräts, verschieden. Eine Durchlichtkamera ist dabei als eine Kamera zu verstehen, welche einen Schattenriss eines (von hinten beleuchteten) Objekts aufzeichnet. Eine Auflichtkamera ist dabei als eine Kamera zu verstehen, deren Aufnahmen überwiegend durch eine Reflektion eines, insbesondere durch die Beleuchtung des Kamerasystems angestrahlten, Objekts gebildet sind. Die Messkamera des Werkzeug-Einstell- und/oder Werkzeug-Messgeräts ist insbesondere zumindest zu einem Vermessen von Werkzeugen, Werkzeugfuttern und/oder Komplettwerkzeugen vorgesehen. Die Messkamera des Werkzeug-Einstell- und/oder Werkzeug-Messgeräts ist eine zur Durchführung der Hauptfunktion des Werkzeug-Einstell- und/oder Werkzeug-Messgeräts verwendete Kamera.

Des Weiteren wird vorgeschlagen, dass die Steuer- und/oder Regeleinheit dazu vorgesehen ist, mittels der Koordinatenerkennung zumindest eine Abmessung der jeweiligen Werkzeuge, Werkzeugfutter, Komplettwerkzeuge und/oder Werkzeug- und/oder Werkzeugfutterpaletten zu ermitteln. Dadurch kann vorteilhaft ein Platzbedarf ermittelt werden, beispielsweise für eine Bewegung des erkannten Objekts innerhalb des Werkzeug-Einstell- und/oder Werkzeug-Messsystems. Zudem kann vorteilhaft eine Passung des Objekts mit einem weiteren Objekt oder einem Lagerplatz oder dergleichen ermittelt werden. Die Abmessung ist insbesondere eine Höhe, eine Breite, eine Tiefe und/oder ein Volumen des erkannten Objekts. Die Abmessung kann mit Hilfe des Algorithmus maschinellen Lernens ermittelt werden. Alternativ kann die Abmessung auch mittels einer auf der Perspektive der Kamera basierenden Dimensionsberechnung ermittelt werden. Insbesondere wird in diesem Fall bei der Koordinatenerkennung die Abmessung nach einer Erkennung des jeweiligen Objekts ermittelt. Insbesondere kann in diesem Fall die Dimensionsberechnung durch mittels der Objekterkennung erfassbare Informationen unterstützt und/oder überprüft werden. Beispielsweise können dazu bekannte Standardabmessungen von bestimmten Werkzeugen, Werkzeugfuttern, Komplettwerkzeugen und/oder Werkzeug- und/oder Werkzeugfutterpaletten in der Steuer- und/oder Regeleinheit abgespeichert sein.

Außerdem wird vorgeschlagen, dass die Steuer- und/oder Regeleinheit dazu vorgesehen ist, mittels der Koordinatenerkennung zumindest eine Position der jeweiligen Werkzeuge, Werkzeugfutter, Komplettwerkzeuge und/oder Werkzeug- und/oder Werkzeugfutterpaletten zu ermitteln. Dadurch kann vorteilhaft ein kollisionsfreies Greifen von erkannten Objekten und/oder eine kollisionsfreie Bewegungstrajektorie zur Bewegung der Objekte innerhalb des Werkzeug-Einstell- und/oder Werkzeug-Messsystems ermittelt werden. Zudem kann vorteilhaft eine Positionierung von Objekten relativ zueinander ermöglicht werden. Die Position ist insbesondere eine räumliche Position / eine Koordinate / ein Koordinatenbereich innerhalb des fixen Koordinatensystems. Die Position kann mit Hilfe des Algorithmus maschinellen Lernens ermittelt werden. Alternativ kann die Position auch mittels einer auf der/den Perspektive/n der Kamera/s basierenden Dimensionsberechnung ermittelt werden. Insbesondere wird in diesem Fall bei der Koordinatenerkennung die Position nach einer Erkennung des jeweiligen Objekts ermittelt. Insbesondere kann in diesem Fall die Positionsberechnung durch mittels der Objekterkennung erfassbare Informationen unterstützt und/oder überprüft werden. Beispielsweise können dazu bekannte Standardabmessungen von bestimmten Werkzeugen, Werkzeugfuttern, Komplettwerkzeugen und/oder Werkzeug- und/oder Werkzeugfutterpaletten in der Steuer- und/oder Regeleinheit abgespeichert sein. Vorzugsweise ist die Steuer- und/oder Regeleinheit dazu vorgesehen, zumindest einen Teil der in der Koordinatenerkennung erfassten Größe, wie dem Objekttyp, der Abmessung und/oder der Position auszugeben, beispielsweise an eine andere Komponente des Werkzeug-Einstell- und/oder Werkzeug-Messsystems, wie dem Handhabungs-Industrieroboter oder an eine externe Komponente, wie eine Werkzeugmaschine oder ein Werkzeugverwaltungssystem.

Wenn das Werkzeug-Einstell- und/oder Werkzeug-Messsystem den Handhabungs-Industrieroboter mit zumindest einer Greifereinheit zu einem Greifen und/oder Bewegen von Werkzeugen, Werkzeugfuttern und/oder Komplettwerkzeugen aufweist, kann vorteilhaft eine besonders effiziente Bedienung, insbesondere Bestückung, des Werkzeug-Einstell- und/oder Werkzeug-Messsystems ermöglicht werden. Ein Handhabungs-Industrieroboter ist insbesondere eine universelle, programmierbare Maschine zur Handhabung, Montage und/oder Bearbeitung von Werkstücken / Objekten. Der Handhabungs-Industrieroboter kann beispielsweise ein 5-Achs-Industrieroboter oder ein 6-Achs-Industrieroboter (jeweils stehend oder hängend) sein. Der Handhabungs-Industrieroboter kann beispielsweise auch ein Raumportalroboter sein.

Zusätzlich wird vorgeschlagen, dass die Steuer- und/oder Regeleinheit dazu vorgesehen ist, mittels der Koordinatenerkennung zumindest eine Position der Greifereinheit zu ermitteln und zumindest die erkannten Positionen von Werkzeug- und/oder Werkzeugfutterpaletten und Greifereinheit mit Numerical-Control-Daten einer Ansteuerung der Greifereinheit abzugleichen, vorzugsweise Positionsdaten der erkannten Positionen von Werkzeug- und/oder Werkzeugfutterpaletten in Numerical-Control-Daten der Ansteuerung der Greifereinheit zu transformieren. Dadurch kann vorteilhaft eine hohe Betriebssicherheit erreicht werden. Vorteilhaft kann ein besonders exaktes und/oder zuverlässiges Navigieren der Greifereinheit in dem Werkzeug-Einstell- und/oder Werkzeug-Messsystem erreicht werden.

Dazu wird vorgeschlagen, dass die Kameraaufnahmen zumindest einen Teil eines Bewegungsbereichs der Greifereinheit, vorzugsweise einen vollständigen Bewegungsbereich der Greifereinheit, umfassen. Dadurch kann vorteilhaft eine hohe Betriebssicherheit erreicht werden. Vorteilhaft kann ein besonders exaktes und/oder zuverlässiges Navigieren der Greifereinheit in dem Werkzeug-Einstell- und/oder Werkzeug-Messsystem erreicht werden. Der Bewegungsbereich der Greifereinheit ist durch die Gesamtheit aller Punkte gebildet, die die Greifereinheit, insbesondere abhängig von der aktuellen Programmierung und/oder Einlernung, im Raum erreichen kann.

Zudem wird vorgeschlagen, dass der trainierte Algorithmus maschinellen Lernens der Steuer- und/oder Regeleinheit oder ein weiterer entsprechend trainierter Algorithmus maschinellen Lernens der Steuer- und/oder Regeleinheit dazu vorgesehen ist, aus den Kameraaufnahmen innerhalb des Werkzeug-Einstell- und/oder Werkzeug-Messsystems angeordnete Greifereinheit-Einlern-Markierungen zu erkennen, welche zur Festlegung von Grenzen des Bewegungsbereichs der Greifereinheit vorgesehen sind, und welche Referenzpositionen für eine, insbesondere selbsttätig durchgeführte, Referenzfahrt des Handhabungs-Industrieroboters ausbilden. Dadurch kann vorteilhaft eine hohe Effizienz erreicht werden. Vorteilhaft kann auf eine manuelle Referenzfahrt des Handhabungs-Industrieroboters verzichtet werden. Vorteilhaft kann ein Einlernvorgang des Handhabungs-Industrieroboters beschleunigt werden. Vorteilhaft kann eine hohe Betriebssicherheit erreicht werden. Der weitere Algorithmus maschinellen Lernens kann auf denselben Grundlagen aufbauen wie der Algorithmus maschinellen Lernens, wobei lediglich andere Trainingsdaten (Greifereinheit-Einlern-Markierungen) verwendet wurden. Der Handhabungs-Industrieroboter ist dazu vorgesehen, die Positionen der Greifereinheit-Einlern-Markierungen, vorzugsweise in einer aus den Greifereinheit-Einlern-Markierungen ausgelesenen Reihenfolge, anzufahren und die jeweiligen zugehörigen Koordinaten zu berechnen und/oder als Numerical-Control-Daten, vorzugsweise in dem fixen Koordinatensystem, abzuspeichern. Es ist auch denkbar, dass der Handhabungs-Industrieroboter die Greifereinheit-Einlern-Markierungen außer Reihenfolge anfährt, jedoch in der aus den Greifereinheit-Einlern-Markierungen ausgelesenen Referenzpunkt-Reihenfolge abspeichert.

Außerdem wird vorgeschlagen, dass die Steuer- und/oder Regeleinheit dazu vorgesehen ist, mittels der Koordinatenerkennung eine Kollisionsprüfung anhand einer Ermittlung von Relativpositionierungen von in den Kameraaufnahmen erkannten Werkzeug- und/oder Werkzeugfutterpaletten und aller von der Greifereinheit zur Bestückung von Halteplätzen, insbesondere von als unbelegt erkannten Halteplätzen, der erkannten Werkzeug- und/oder Werkzeugfutterpaletten anzufahrenden Positionen durchzuführen. Dadurch kann vorteilhaft eine hohe Betriebssicherheit erreicht werden. Zudem kann vorteilhaft eine hohe Effizienz erreicht werden, insbesondere indem freie Halteplätze präziser und/oder schneller angefahren werden können. Insbesondere ist dem Werkzeug-Einstell- und/oder Werkzeug-Messsystem, insbesondere der Steuer- und/oder Regeleinheit durch die Koordinatenerkennung bekannt, welche Halteplätze der Werkzeug- und/oder Werkzeugfutterpaletten belegt sind und welche frei sind, welchen Raum die in den Halteplätzen der Werkzeug- und/oder Werkzeugfutterpalette angeordneten Objekte einnehmen und welchen Raum die Greifereinheit und eventuell darin aktuell gehaltere Objekte einnehmen. Dadurch kann eine Eingrenzung aller erlaubter, kollisionsvermeidender Positionen der Greifereinheit vorgenommen werden. Die Steuer- und/oder Regeleinheit erlaubt in der Folge dann nur eine Ansteuerung der innerhalb dieser Eingrenzung liegenden Greifereinheits-Positionen. Die Steuer- und/oder Regeleinheit unterbindet dann in der Folge jegliche Bewegungen der Greifereinheit, die eine Überschreitung dieser Eingrenzung durch die Greifereinheit und/oder durch ein von der Greifereinheit gehaltertes Objekt erzeugen würden. Insbesondere werden also die in der Koordinatenerkennung erfassten Daten zur Kollisionsprüfung bei einem Beladen und/oder bei einem Entladen von Werkzeug- und/oder Werkzeugfutterpaletten verwendet. Beispielsweise kann durch die Koordinatenerkennung vorteilhaft ermöglicht werden, dass nach einer Betriebsunterbrechung, z.B. durch einen Stromausfall, ein automatisiertes und kollisionsfreies Fortsetzen des Be- und Entladeprozesses von Werkzeug- und/oder Werkzeugfutterpaletten ermöglicht ist, selbst dann wenn ein aktueller Fortschritt eines Prozesses bzw. ein aktueller Positionierungs- und/oder Beladungszustand der Greifereinheit und der Werkzeug- und/oder Werkzeugfutterpalette verloren wurde. Durch die Ermittlung der Relativpositionierung von Werkzeug- und/oder Werkzeugfutterpalette und Greifereinheit kann vorteilhaft eine Erkennung einer fehlerhaft positionierten oder fehlerhaft orientierten Palette ermöglicht werden.

Überdies wird vorgeschlagen, dass die Steuer- und/oder Regeleinheit dazu vorgesehen ist, optimale, insbesondere kürzeste und/oder mit einem einfachsten Bewegungsablauf versehene, Bewegungsbahnen für die Greifereinheit zum Anfahren wenigstens eines unbelegten Halteplatzes zu ermitteln, und insbesondere an eine Ansteuerung der Greifereinheit auszugeben. Dadurch kann vorteilhaft eine Effizienz erhöht werden. Vorteilhaft kann ein direkteres Anfahren von Halteplätzen ermöglicht werden. Vorteilhaft können Bewegungsbahnen der Greifereinheit verkürzt werden. Dadurch kann vorteilhaft ein Energieverbrauch der Greifereinheit gesenkt und/oder eine Lebensdauer der Greifereinheit erhöht werden. Beispielsweise könnte bei einer Ausbildung des Handhabungs-Industrieroboters als Raumportalroboter eine für ein Überfahren aller in einer Werkzeug- und/oder Werkzeugfutterpalette eingelagerten Objekte notwendige Greiferhöhe optimiert werden. Wenn nur relativ kurze Objekte eingelagert sind, kann die eingestellte Überfahrhöhe geringer sein als wenn auch lange Objekte eingelagert sind. Auch muss bei einem Erkennen von unbelegten Plätzen die Greifereinheit nicht für jede Bewegung zunächst seitlich oder vertikal aus dem Bereich der Werkzeug- und/oder Werkzeugfutterpaletten herausgefahren werden. Vorteilhaft können dadurch unnötige Umwege der Greifereinheit vermieden werden. Insbesondere kann die Steuer- und/oder Regeleinheit dazu vorgesehen sein, die auf diese Weise ermittelte optimierte Ansteuerung der Greifereinheit in Form von Numerical-Control-Daten an die Greifereinheit auszugeben. Insbesondere sind die optimalen Bewegungsbahnen der Greifereinheit verschieden von fix und unveränderlich vorgegebenen / programmierten Greifereinheiten-Bewegungsabläufen.

Ferner wird vorgeschlagen, dass die Steuer- und/oder Regeleinheit dazu vorgesehen ist, mittels der Koordinatenerkennung eine Belegungssituation von Halteplätzen der Werkzeug- und/oder Werkzeugfutterpaletten zu ermitteln. Durch die vorgeschlagene Erkennung von unbelegten Halteplätzen kann vorteilhaft eine Be- oder Entladezeit für ein Einsetzen oder Entnehmen eines Objekts in oder aus der Werkzeug- und/oder Werkzeugfutterpalette reduziert werden. Vorteilhaft kann die Greifereinheit auf ein "blindes" Testen der Belegung jedes einzelnen dazwischen liegenden Platzes verzichten. Zudem kann vorteilhaft ein Risiko eines Anfahrens eines bereits belegten Platzes, z.B. durch eine Fehlprogrammierung der Greifereinheit, verringert werden. Außerdem kann vorteilhaft durch die Belegungserkennung von Halteplätzen ein Abgleich mit einem Werkzeugmanagementsystem erfolgen, so dass fehlende oder zusätzlich vorhandene Werkzeuge, Werkzeugfutter und/oder Komplettwerkzeuge erkannt werden können.

Zudem wird vorgeschlagen, dass das Werkzeug-Einstell- und/oder Werkzeug-Messsystem zumindest eine weitere Kamera aufweist, welche zumindest dazu vorgesehen ist, weitere Kameraaufnahmen von dem Werkzeug-Einstell- und/oder Werkzeug-Messbereich des Werkzeug-Einstell- und/oder Werkzeug-Messgeräts, von dem Werkzeug-Einlager-, Werkzeug-Auslager- oder Werkzeug-Zwischenlager-Bereich und/oder von zumindest einem Teil eines Bewegungsbereichs der Greifereinheit, vorzugsweise einem vollständigen Bewegungsbereich der Greifereinheit, aufzunehmen, wobei der trainierte Algorithmus maschinellen Lernens der Steuer- und/oder Regeleinheit dazu vorgesehen ist, die Koordinatenerkennung anhand einer kombinierten Auswertung der Kameraaufnahmen der Kamera und der weiteren Kameraaufnahmen der weiteren Kamera zu bewerkstelligen. Die weitere Kamera kann dazu verwendet werden, um einen für die Koordinatenerkennung auswertbaren Gesamterfassungsbereich des Werkzeug-Einstell- und/oder Werkzeug-Messsystems zu vergrößern. Alternativ oder zusätzlich kann die weitere Kamera für eine 3-D-Erfassung verwendet werden. Dadurch kann vorteilhaft die Koordinatenerkennung präzisiert und/oder ein durch die Kameras abgedeckter Erfassungsbereich vergrößert werden. Insbesondere kann die Präzision der Ermittlung der Positionen und/oder der Abmessungen der erkannten Objekte erhöht werden. Insbesondere werden die Kameraaufnahmen von Kamera und weiterer Kamera zur einer Ermittlung von 3-D-Daten herangezogen. Insbesondere ist die Steuer- und/oder Regeleinheit zu einer 3-D-Koordinatenerkennung basierend auf einer Zusammenschau von Kameraaufnahmen der Kamera und der weiteren Kamera vorgesehen. Insbesondere sind die Positionen der Kameras und deren Kameraeinstellungen, wie Zoom, Winkel, Blickfeld, etc., kalibriert und in der Steuer- und/oder Regeleinheit abgespeichert.

Weiterhin wird vorgeschlagen, dass zumindest ein von der Kamera, und insbesondere der weiteren Kamera, verschiedener weiterer Messsensor des Werkzeug-Einstell- und/oder Werkzeug-Messgeräts dazu vorgesehen ist, von der Steuer- und/oder Regeleinheit bei der Durchführung der Koordinatenerkennung herangezogen zu werden. Dadurch kann vorteilhaft die Koordinatenerkennung präzisiert werden. Der von der Kamera und der weiteren Kamera verschiedene Messsensor basiert vorzugsweise auf einem nicht-optischen Messprinzip. Es ist jedoch auch denkbar, dass der weitere Messsensor auf einem optischen Messprinzip basiert, welches jedoch verschieden ist von einer Auflichtkameraaufnahme.

Alternativ oder zusätzlich dazu wird vorgeschlagen, dass zumindest ein von der Kamera, und insbesondere der weiteren Kamera, verschiedener weiterer Messsensor des Werkzeug-Einstell- und/oder Werkzeug-Messgeräts dazu vorgesehen ist, von der Steuer- und/oder Regeleinheit zu einer Plausibilitätsprüfung der in der Koordinatenerkennung ermittelten Daten, wie beispielsweise Positionen, Abmessungen, etc., herangezogen zu werden. Dadurch kann vorteilhaft die Koordinatenerkennung verifiziert werden. Vorteilhaft kann eine hohe Betriebssicherheit erreicht werden. Insbesondere werden zur Plausibilitätsprüfung aus Messdaten des weiteren Messsensors Abmessungen und/oder Positionen von Objekten ermittelt und mit den in der Koordinatenerkennung ermittelten Messergebnissen abgeglichen. Bei einer Abweichung kann beispielsweise eine Warnmeldung ausgegeben werden, eine Messung wiederholt werden und/oder ein Betrieb des Werkzeug-Einstell- und/oder Werkzeug-Messsystems pausiert werden.

Wenn der weitere Messsensor ein Lasertriangulationssensor des Werkzeug-Einstell- und/oder Werkzeug-Messgeräts, ein taktiler Taster des Werkzeug-Einstell- und/oder Werkzeug-Messgeräts, ein Twip-Sensor des Werkzeug-Einstell- und/oder Werkzeug-Messgeräts oder eine Durchlichtkamera des Werkzeug-Einstell- und/oder Werkzeug-Messgeräts ist, kann vorteilhaft eine zuverlässige Präzisierung der Koordinatenerkennung und/oder eine zuverlässige Plausibilitätsprüfung der Koordinatenerkennung ermöglicht werden. Der Twip-Sensor ist dabei insbesondere als ein konfokaler Mikroskopsensor zur 3-D Oberflächenerfassung ausgebildet, z.B. mit einer rotierenden Mikrolinsenscheibe, wie er unter der Bezeichnung CONSIGNO von der Firma Twip Optical Solutions (Pleidelsheim, Deutschland) vertrieben wird. Die Durchlichtkamera ist insbesondere ein Kamerasystem, welches über eine flächige Hintergrundbeleuchtung verfügt, mittels der eine Schattenriss-Aufnahme von Außenkonturen von Objekten erhalten werden kann. Bei der Durchlichtkamera wird das aufzunehmende Objekt zwischen die Flächenleuchte und einen auf die Flächenleuchte ausgerichteten Kamerasensor positioniert. Der taktile Taster ist insbesondere ein Sensorfühler, welcher dazu vorgesehen ist, eine Oberfläche des zu sensierenden Objekts zu berühren / zu überstreichen und dadurch Informationen über eine Beschaffenheit des Objekts zu erhalten.

Außerdem wird vorgeschlagen, dass zumindest ein weiterer von einem Sensormesswert verschiedener Betriebsparameter einer Komponente des Werkzeug-Einstell- und/oder Werkzeug-Messsystems, beispielsweise ein Stromverbrauch/Leistungsaufnahme einer Greifereinheit des Werkzeug-Einstell- und/oder Werkzeug-Messsystems oder einer Rotationseinheit des Werkzeug-Einstell- und/oder Werkzeug-Messgeräts, dazu vorgesehen ist, von der Steuer- und/oder Regeleinheit zu einer Plausibilitätsprüfung der in der Koordinatenerkennung ermittelten Daten, wie beispielsweise Abmessungen von Werkzeugen, Werkzeugfuttern, Komplettwerkzeugen und/oder Werkzeug- und/oder Werkzeugfutterpaletten, herangezogen zu werden. Dadurch kann vorteilhaft die Koordinatenerkennung verifiziert werden. Vorteilhaft kann eine hohe Betriebssicherheit erreicht werden. Insbesondere wird eine Plausibilität dadurch ermittelt, dass ein zu erwartender Wert für den Betriebsparameter, also beispielsweise ein zu erwartender Stromverbrauch / eine zu erwartende Leistungsaufnahme der Greifereinheit und/oder der Rotationseinheit mit einem gemessenen Stromverbrauch / einer gemessenen Leistungsaufnahme der Greifereinheit und/oder der Rotationseinheit abgeglichen wird und auf wesentliche Abweichungen geprüft wird. Bei einer Erkennung einer wesentlichen Abweichung kann beispielsweise eine Warnmeldung ausgegeben werden, eine Messung wiederholt werden und/oder ein Betrieb des Werkzeug-Einstell- und/oder Werkzeug-Messsystems pausiert werden. Beispielsweise kann eine Gewichtsabweichung eines Objekts eine Stromverbrauchsabweichung der Greifereinheit erzeugen. Beispielsweise kann eine starke Geometrieabweichung eines Objekts eine Stromverbrauchsabweichung der Greifereinheit aufgrund veränderter Hebelverhältnisse erzeugen. Beispielsweise kann eine Formabweichung eines Objekts oder eine fehlerhafte Positionierung eines Objekts in der Rotationseinheit eine Stromverbrauchsabweichung durch einen abweichenden Rundlauf und/oder eine abweichende Trägheit der Rotationseinheit erzeugen. Die Rotationseinheit ist vorzugsweise als eine Werkzeug- und/oder Werkzeugfutter-Halterung, beispielsweise eine Spindeleinheit des Werkzeug-Einstell- und/oder Werkzeug-Messgeräts ausgebildet.

Zusätzlich wird vorgeschlagen, dass die Steuer- und/oder Regeleinheit, insbesondere der trainierte Algorithmus maschinellen Lernens der Steuer- und/oder Regeleinheit, dazu vorgesehen ist, zumindest anhand der Kameraaufnahmen zumindest eine Anwesenheit eines Bedieners, insbesondere in einem Nahbereich des Werkzeug-Einstell- und/oder Werkzeug-Messsystems und/oder dem Werkzeug-Messbereich zu erkennen, und vorzugsweise Ortskoordinaten des Bedieners zu ermitteln. Dadurch kann vorteilhaft eine besonders hohe Betriebssicherheit und/oder Bedienersicherheit erreicht werden. Zudem kann vorteilhaft eine Effizienz maximiert werden. Insbesondere umfasst die Steuer- und/oder Regeleinheit, vorzugsweise der Algorithmus maschinellen Lernens der Steuer- und/oder Regeleinheit eine Personenerkennungsfunktion. Insbesondere ist die Koordinatenerkennung dazu vorgesehen, die Ortskoordinaten des Bedieners und/oder einen Abstand des Bedieners von dem Werkzeug-Messbereich zumindest grob zu ermitteln. Die Kameraaufnahmen können insbesondere als Standbilder oder als bewegte Bilder ausgebildet sein.

Wenn dabei die Steuer- und/oder Regeleinheit oder eine weitere Steuereinheit des Werkzeug-Einstell- und/oder Werkzeug-Messsystems dazu vorgesehen ist, einen Systemparameter, insbesondere eine Bewegungsgeschwindigkeit zumindest einer Komponente des Werkzeug-Einstell- und/oder Werkzeug-Messsystems, wie beispielsweise einer Rotationseinheit des Werkzeug-Einstell- und/oder Werkzeug-Messgeräts, eines Einspannmechanismus einer Werkzeug- und/oder Werkzeugfutter-Halteeinheit des Werkzeug-Einstell- und/oder Werkzeug-Messgeräts oder einer Greifereinheit des Werkzeug-Einstell- und/oder Werkzeug-Messsystems, in Abhängigkeit von der erkannten An- oder Abwesenheit des Bedieners, insbesondere in Abhängigkeit von einer erkannten Ortskoordinate eines anwesenden Bedieners, anzupassen, kann vorteilhaft eine Effizienz wesentlich gesteigert werden. Insbesondere wird die Bewegungsgeschwindigkeit erhöht, wenn eine Abwesenheit des Bedieners oder eine ausreichende Entfernung des Bedieners von dem Objekt ermittelt wird. Insbesondere wird die Bewegungsgeschwindigkeit gesenkt oder die Bewegung komplett gestoppt oder verhindert, wenn eine Anwesenheit des Bedieners oder eine unzureichende Entfernung des Bedieners von dem Objekt ermittelt wird.

Ferner wird ein, vorzugsweise computerimplementiertes, Werkzeug-Einstell- und/oder Werkzeug-Messverfahren, insbesondere mittels des Werkzeug-Einstell- und/oder Werkzeug-Messsystems, vorgeschlagen, wobei in zumindest einem Verfahrensschritt die Kamera, insbesondere des optischen Werkzeug-Einstell- und/oder Werkzeug-Messgeräts, Kameraaufnahmen von einem Werkzeug-Einstell- und/oder Werkzeug-Messbereich des Werkzeug-Einstell- und/oder Werkzeug-Messgeräts und/oder von einem Werkzeug-Einlager-, Werkzeug-Auslager- oder Werkzeug-Zwischenlager-Bereich aufnimmt, wobei in zumindest einem weiteren Verfahrensschritt die Kameraaufnahmen zumindest temporär von der Steuer- und/oder Regeleinheit abgespeichert und ausgewertet werden, und wobei in zumindest einem weiteren Verfahrensschritt von dem trainierten Algorithmus maschinellen Lernens anhand der ausgewerteten Kameraaufnahmen die Koordinatenerkennung bewerkstelligt wird, welche eine Erkennung von Werkzeugen, Werkzeugfuttern, Komplettwerkzeugen und/oder Werkzeug- und/oder Werkzeugfutterpaletten und eine Bestimmung derer Koordinaten in dem fixen Koordinatensystem umfasst. Dadurch können vorteilhafte Betriebseigenschaften für das Werkzeug-Einstell- und/oder Werkzeug-Messsystem erreicht werden. Vorteilhaft kann eine Betriebssicherheit erhöht werden. Vorteilhaft kann eine Betriebseffizienz erhöht werden. Vorteilhaft kann eine Geschwindigkeit des Werkzeug-Einstell- und/oder Werkzeug-Messsystems erhöht werden. Vorteilhaft können Betriebskosten gesenkt werden.

Außerdem wird ein Computerprogrammprodukt und/oder eine Computerprogramm-Recheninfrastruktur, umfassend Befehle, die bei einer Ausführung des Computerprogramms durch eine Recheneinheit, vorzugsweise der Steuer- und/oder Regeleinheit des Werkzeug-Einstell- und/oder Werkzeug-Messsystems, diese veranlassen, die die Ausführung des trainierten Algorithmus maschinellen Lernens umfassenden Schritte des Werkzeugidentifikationsverfahrens auszuführen, und/oder die entsprechende Steuer- und/oder Regeleinheit für das Werkzeug-Einstell- und/oder Werkzeug-Messsystem umfassend das Computerprogrammprodukt, vorgeschlagen. Vorteilhaft kann eine Betriebssicherheit erhöht werden. Vorteilhaft kann eine Betriebseffizienz erhöht werden.

Das erfindungsgemäße Werkzeug-Einstell- und/oder Werkzeug-Messsystem, das erfindungsgemäße Werkzeug-Einstell- und/oder Werkzeug-Messverfahren, das erfindungsgemäße Computerprogrammprodukt und die erfindungsgemäße Steuer- und/oder Regeleinheit sollen hierbei nicht auf die oben beschriebene Anwendung und Ausführungsform beschränkt sein. Insbesondere kann das erfindungsgemäße Werkzeug-Einstell- und/oder Werkzeug-Messsystem, das erfindungsgemäße Werkzeug-Einstell- und/oder Werkzeug-Messverfahren, das erfindungsgemäße Computerprogrammprodukt und die erfindungsgemäße Steuer- und/oder Regeleinheit zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: schematisch und perspektivisch ein Werkzeug-Einstell- und/oder Werkzeug-Messsystem,
- Fig. 2: eine schematische Seitenansicht eines in einem Werkzeugfutter eingespannten Werkzeugs und
- Fig. 3: ein schematisches Ablaufdiagramm eines Werkzeug-Einstell- und/oder Werkzeug-Messverfahrens mit dem Werkzeug-Einstell- und/oder Werkzeug-Messsystem.

### Beschreibung des Ausführungsbeispiels

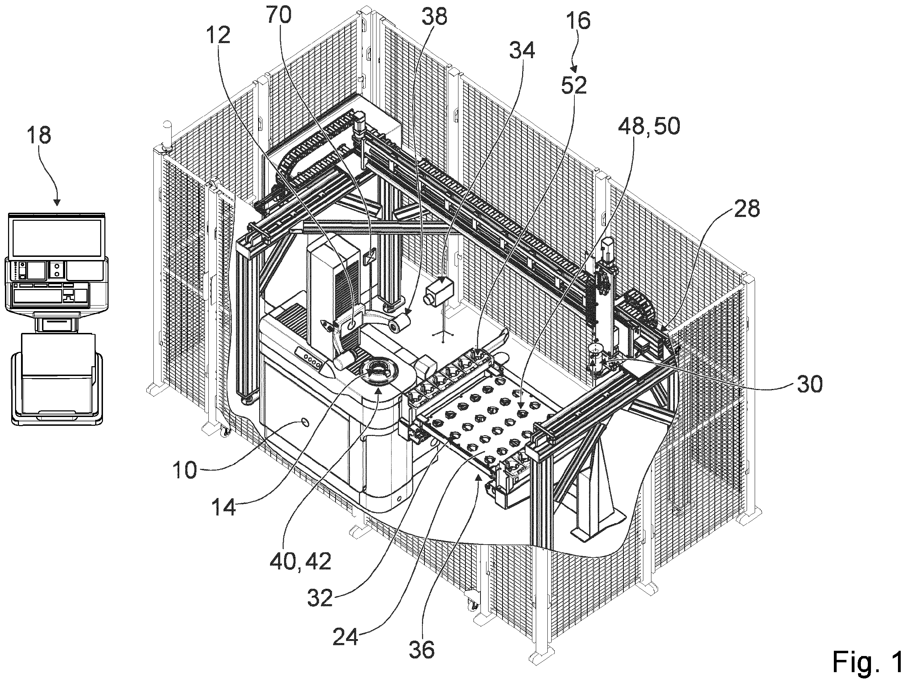

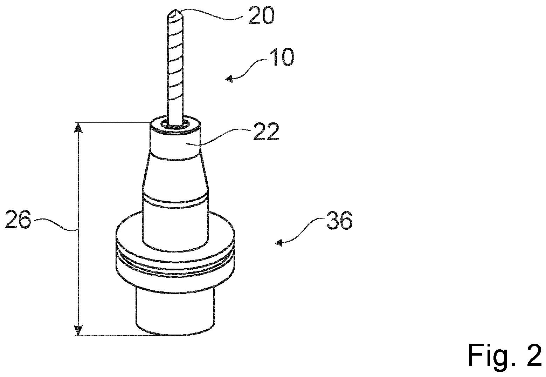

Die Figur 1 zeigt ein beispielhaftes Werkzeug-Einstell- und/oder Werkzeug-Messsystem 16. Alternative Ausgestaltungen von Werkzeug-Einstell- und/oder Werkzeug-Messsystemen 16, wie beispielsweise die bereits erwähnte "roboBox", die unter anderem in dem Europäischen Patent mit der Nummer EP 3 747 596 B1 beschrieben ist, sind ebenfalls im Einklang mit der beschriebenen Erfindung. Das Werkzeug-Einstell- und/oder Werkzeug-Messsystem 16 weist ein optisches Werkzeug-Einstell- und/oder Werkzeug-Messgerät 10 auf. Das Werkzeug-Einstell- und/oder Werkzeug-Messgerät 10 bildet einen Werkzeug-Einstell- und/oder Werkzeug-Messbereich 14 aus. Das Werkzeug-Einstell- und/oder Werkzeug-Messgerät 10 ist zumindest zu einer Vermessung von Werkzeugen 20, Werkzeugfuttern 22 (vgl. Fig. 2) und/oder Komplettwerkzeugen, die innerhalb des Werkzeug-Einstell- und/oder Werkzeug-Messbereichs 14 angeordnet werden, vorgesehen. Das Werkzeug-Einstell- und/oder Werkzeug-Messgerät 10 weist eine Werkzeug- und/oder Werkzeugfutter-Halteeinheit 42 auf. Die Werkzeug- und/oder Werkzeugfutter-Halteeinheit 42 ist zu einem Fixieren des Werkzeugs 20, Werkzeugfutters 22 oder Komplettwerkzeugs innerhalb des Werkzeug-Einstell- und/oder Werkzeug-Messbereichs 14 vorgesehen. Das Werkzeug-Einstell- und/oder Werkzeug-Messgerät 10 weist eine Rotationseinheit 40 auf. Die Rotationseinheit 40 ist zu einer Rotation des in der Werkzeug- und/oder Werkzeugfutter-Halteeinheit 42 gehalterten Werkzeugs 20, Werkzeugfutters 22 oder Komplettwerkzeugs vorgesehen. Die Rotationseinheit 40 ist als eine Spindeleinheit mit Vorsatzhalter des Werkzeug-Einstell- und/oder Werkzeug-Messgeräts 10 ausgebildet. Das Werkzeug-Einstell- und/oder Werkzeug-Messsystem 16 weist einen Handhabungs-Industrieroboter 28 auf. Der Handhabungs-Industrieroboter 28 ist in der Ausgestaltung der Fig. 1 beispielhaft als ein Raumportalroboter ausgebildet. Andere Formen und Arten von Handhabungs-Industrierobotern 28 wären selbstverständlich alternativ ebenfalls denkbar. Der Handhabungs-Industrieroboter 28 weist eine Greifereinheit 30 auf. Die Greifereinheit 30 ist zu einem Greifen und/oder Bewegen der Werkzeuge 20, Werkzeugfutter 22 und/oder Komplettwerkzeuge vorgesehen. Die Greifereinheit 30 ist zu einem Bewegen der Werkzeuge 20, Werkzeugfutter 22 und/oder Komplettwerkzeuge zwischen verschiedenen Komponenten und/oder Bereichen des Werkzeug-Einstell- und/oder Werkzeug-Messsystems 16 vorgesehen.

Das Werkzeug-Einstell- und/oder Werkzeug-Messsystem 16 bildet zudem einen Werkzeug-Einlager-Bereich 48 aus. In den Werkzeug-Einlager-Bereich 48 sind Werkzeug- und/oder Werkzeugfutterpaletten 24 positionierbar. Die Werkzeug- und/oder Werkzeugfutterpaletten 24 umfassen Halteplätze 32 zur Aufnahme von Werkzeugen 20, Werkzeugfuttern 22 und/oder Komplettwerkzeugen. Der Werkzeug-Einlager-Bereich 48 ist zu einem Vorhalten von Werkzeugen 20, Werkzeugfuttern 22 und/oder Komplettwerkzeugen für ein anschließendes Vermessen und/oder Einstellen durch das Werkzeug-Einstell- und/oder Werkzeug-Messgerät 10 vorgesehen. Die Werkzeuge 20, Werkzeugfutter 22 und/oder Komplettwerkzeuge werden dabei vorzugsweise in den Halteplätzen 32 der Werkzeug- und/oder Werkzeugfutterpalette 24 vorgehalten.

Das Werkzeug-Einstell- und/oder Werkzeug-Messsystem 16 bildet zudem einen Werkzeug-Auslager-Bereich 50 aus. In den Werkzeug-Auslager-Bereich 50 sind Werkzeug- und/oder Werkzeugfutterpaletten 24 positionierbar. Der Werkzeug-Auslager-Bereich 50 ist zu einem Aufnehmen von Werkzeugen 20, Werkzeugfuttern 22 und/oder Komplettwerkzeugen, die durch das Werkzeug-Einstell- und/oder Werkzeug-Messgerät 10 vermessen und/oder eingestellt wurden, vorgesehen. Die vermessenen Werkzeuge 20, Werkzeugfutter 22 und/oder Komplettwerkzeuge werden dabei vorzugsweise in die Halteplätze 32 der Werkzeug- und/oder Werkzeugfutterpalette 24 eingesetzt. Der Werkzeug-Auslager-Bereich 50 ist in dem in der Figur 1 dargestellten Ausführungsbeispiel identisch zu dem Werkzeug-Einlager-Bereich 48 ausgebildet. Es könnten jedoch auch getrennte Werkzeug-Auslager-Bereiche 50 und Werkzeug-Einlager-Bereiche 48 vorgesehen sein, welche beispielsweise mit jeweils einer Werkzeug- und/oder Werkzeugfutterpalette 24 bestückt sind. Das Werkzeug-Einstell- und/oder Werkzeug-Messsystem 16 bildet zudem einen Werkzeug-Zwischenlager-Bereich 52 aus. Der Werkzeug-Zwischenlager-Bereich 50 ist zu einem Aufnehmen von Werkzeugen 20, Werkzeugfuttern 22 und/oder Komplettwerkzeugen, die sich zwischen verschiedenen Arbeitsschritten des Werkzeug-Einstell- und/oder Werkzeug-Messsystems 16 befinden, vorgesehen.

Das Werkzeug-Einstell- und/oder Werkzeug-Messgerät 10 weist eine Kamera 12 auf. Die Kamera 12 ist dazu vorgesehen, Kameraaufnahmen von dem Werkzeug-Einstell- und/oder Werkzeug-Messbereich 14, von dem Werkzeug-Einlager-Bereich 48, von dem Werkzeug-Auslager-Bereich 50 und/oder von dem Werkzeug-Zwischenlager-Bereich 52 aufzunehmen. Die Kamera 12 ist eine Auflichtkamera. Die Kamera 12 ist eine Messkamera, insbesondere eine Auflichtmesskamera, des Werkzeug-Einstell- und/oder Werkzeug-Messgeräts 10. Die Messkamera des Werkzeug-Einstell- und/oder Werkzeug-Messgeräts 10 ist zu dem Vermessen der Werkzeuge 20, Werkzeugfutter 22 und/oder Komplettwerkzeuge vorgesehen. Das Werkzeug-Einstell- und/oder Werkzeug-Messgerät 10 weist eine weitere Kamera 34 auf. Die weitere Kamera 34 ist eine Auflichtkamera. Die weitere Kamera 34 ist verschieden von einer Messkamera des Werkzeug-Einstell- und/oder Werkzeug-Messgeräts 10 und/oder getrennt von dem Werkzeug-Einstell- und/oder Werkzeug-Messgerät 10 ausgebildet. Die weitere Kamera 34 ist dazu vorgesehen, weitere Kameraaufnahmen von dem Werkzeug-Einstell- und/oder Werkzeug-Messbereich 14, von dem Werkzeug-Einlager-Bereich 48, von dem Werkzeug-Auslager-Bereich 50 und/oder von dem Werkzeug-Zwischenlager-Bereich 52 aufzunehmen. Die Kameraaufnahmen und die weiteren Kameraaufnahmen umfassen jeweils zumindest einen Teil eines Bewegungsbereichs der Greifereinheit 30. Die Kameraaufnahmen und/oder die weiteren Kameraaufnahmen können jedoch auch den vollständigen Bewegungsbereich der Greifereinheit 30 umfassen. Es ist auch denkbar, dass die Kameraaufnahmen und die weiteren Kameraaufnahmen nur gemeinsam den vollständigen Bewegungsbereich der Greifereinheit 30 umfassen. Die Kameraaufnahmen und die weiteren Kameraaufnahmen können zudem zu einer Ermittlung von dreidimensionalen Bilddaten kombiniert werden.

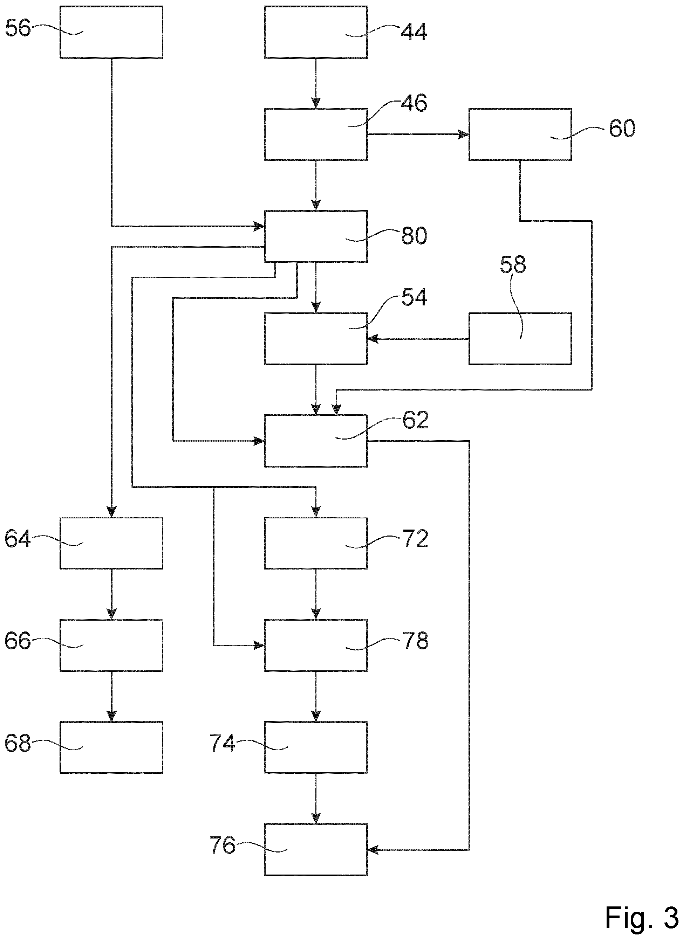

Das Werkzeug-Einstell- und/oder Werkzeug-Messsystem 16 weist eine Steuer- und/oder Regeleinheit 18 auf. In der Ausgestaltung der Figur 1 ist die Steuer- und/oder Regeleinheit 18 als lokales Teil des Werkzeug-Einstell- und/oder Werkzeug-Messsystems 16 ausgebildet. Alternativ könnte die Steuer- und/oder Regeleinheit 18 jedoch auch als externes oder delokalisiertes Teil des Werkzeug-Einstell- und/oder Werkzeug-Messsystems 16 ausgebildet sein. Die Steuer- und/oder Regeleinheit 18 ist zumindest dazu vorgesehen, die Kameraaufnahmen und/oder die weiteren Kameraaufnahmen zumindest temporär abzuspeichern. Die Steuer- und/oder Regeleinheit 18 ist zumindest dazu vorgesehen, die Kameraaufnahmen und/oder die weiteren Kameraaufnahmen auszuwerten. Die Steuer- und/oder Regeleinheit 18 umfasst einen trainierten Algorithmus maschinellen Lernens. Der trainierte Algorithmus maschinellen Lernens ist zumindest dazu vorgesehen, anhand der ausgewerteten Kameraaufnahmen eine Koordinatenerkennung zu bewerkstelligen. Der trainierte Algorithmus maschinellen Lernens ist zumindest dazu vorgesehen, anhand einer kombinierten Auswertung der Kameraaufnahmen der Kamera 12 und der weiteren Kameraaufnahmen der weiteren Kamera 34 die Koordinatenerkennung zu bewerkstelligen. Die Steuer- und/oder Regeleinheit 18 ist zumindest mit Hilfe der Kamera 12 zu einer Durchführung eines im Zusammenhang mit der Figur 3 beschriebenen Werkzeug-Einstell- und/oder Werkzeug-Messverfahrens, insbesondere computerimplementierten Werkzeug-Einstell- und/oder Werkzeug-Messverfahrens, vorzugsweise computerimplementierten, eine Objekterkennung umfassenden Werkzeug-Einstell- und/oder Werkzeug-Messverfahrens, mittels des Algorithmus maschinellen Lernens vorgesehen. Die Steuer- und/oder Regeleinheit 18 umfasst ein gespeichertes Computerprogrammprodukt. Das Computerprogrammprodukt könnte auch auf externen Datenträgern oder in einer Computerprogramm-Recheninfrastruktur gespeichert sein. Das Computerprogrammprodukt umfasst ein Computerprogramm mit Befehlen, die bei einer Ausführung durch die Steuer- und/oder Regeleinheit 18 diese veranlassen, die Schritte des beschriebenen Werkzeug-Einstell- und/oder Werkzeug-Messverfahrens auszuführen. Das Computerprogrammprodukt umfasst ein Computerprogramm mit Befehlen, die bei einer Ausführung durch die Steuer- und/oder Regeleinheit 18 diese veranlassen, den Algorithmus maschinellen Lernens zur Erkennung von Objekten in Kameraaufnahmen der Kamera 12 auszuführen. Das Computerprogrammprodukt umfasst ein Computerprogramm mit Befehlen, die bei einer Ausführung durch die Steuer- und/oder Regeleinheit 18 diese veranlassen, den Algorithmus maschinellen Lernens zur Koordinatenerkennung auszuführen.

Die Koordinatenerkennung umfasst eine Erkennung, insbesondere Objekterkennung / Typerkennung, der Werkzeuge 20, Werkzeugfutter 22, Komplettwerkzeuge und/oder Werkzeug- und/oder Werkzeugfutterpaletten 24. Die Koordinatenerkennung umfasst eine Bestimmung von Raum-Koordinaten der Werkzeuge 20, Werkzeugfutter 22, Komplettwerkzeuge und/oder Werkzeug- und/oder Werkzeugfutterpaletten 24 in einem fixen Koordinatensystem, vorzugsweise in einem NC-Koordinatensystem des Handhabungs-Industrieroboters. Die Erkennung, insbesondere Objekterkennung / Typerkennung, der Werkzeuge 20, Werkzeugfutter 22, Komplettwerkzeuge und/oder Werkzeug- und/oder Werkzeugfutterpaletten 24 wird dabei von dem trainierten Algorithmus maschinellen Lernens vorgenommen. Der Algorithmus maschinellen Lernens ist speziell auf die Erkennung von verschiedenen Werkzeugen 20, Werkzeugfuttern 22, Komplettwerkzeugen und/oder Werkzeug- und/oder Werkzeugfutterpaletten 24 aus Kameraaufnahmen trainiert. Der trainierte Algorithmus maschinellen Lernens ist ein CNN (Convolutional Neural Network)-Algorithmus. Die Bestimmung der Raum-Koordinaten der Werkzeuge 20, Werkzeugfutter 22, Komplettwerkzeuge und/oder Werkzeug- und/oder Werkzeugfutterpaletten 24 in dem fixen Koordinatensystem kann von dem Algorithmus maschinellen Lernens durchgeführt sein oder zumindest durch den Algorithmus maschinellen Lernens unterstützt sein. Die Berechnung der Raum-Koordinaten der Werkzeuge 20, Werkzeugfutter 22, Komplettwerkzeuge und/oder Werkzeug- und/oder Werkzeugfutterpaletten 24 in dem fixen Koordinatensystem aus den Kameraaufnahmen und/oder den weiteren Kameraaufnahmen kann jedoch auch unabhängig von dem Algorithmus maschinellen Lernens erfolgen.

Die Steuer- und/oder Regeleinheit 18 ist dazu vorgesehen, mittels der Koordinatenerkennung zumindest eine Abmessung 26 (vgl. Fig. 2) der jeweiligen Werkzeuge 20, Werkzeugfutter 22, Komplettwerkzeuge und/oder Werkzeug- und/oder Werkzeugfutterpaletten 24 zu ermitteln. Die Steuer- und/oder Regeleinheit 18 ist dazu vorgesehen, mittels der Koordinatenerkennung zumindest eine Position 36 der jeweiligen Werkzeuge 20, Werkzeugfutter 22, Komplettwerkzeuge und/oder Werkzeug- und/oder Werkzeugfutterpaletten 24 zu ermitteln. Die Steuer- und/oder Regeleinheit 18 ist dazu vorgesehen, mittels der Koordinatenerkennung zumindest eine Position der Greifereinheit 30 zu ermitteln und zumindest die erkannten Positionen von Werkzeug- und/oder Werkzeugfutterpaletten 24 und Greifereinheit 30 mit Numerical-Control-Daten einer Ansteuerung der Greifereinheit 30 abzugleichen. Die Steuer- und/oder Regeleinheit 18 ist dazu vorgesehen, Positionsdaten der erkannten Positionen von Werkzeug- und/oder Werkzeugfutterpaletten 24 in Numerical-Control-Daten der Ansteuerung der Greifereinheit 30 zu transformieren.

Die Steuer- und/oder Regeleinheit 18 ist dazu vorgesehen, mittels der Koordinatenerkennung eine Kollisionsprüfung anhand einer Ermittlung von Relativpositionierungen von in den Kameraaufnahmen erkannten Werkzeug- und/oder Werkzeugfutterpaletten 24 und aller von der Greifereinheit 30 zur Bestückung von Halteplätzen 32, insbesondere von als unbelegt erkannten Halteplätzen 32, der erkannten Werkzeug- und/oder Werkzeugfutterpaletten 24 anzufahrenden Positionen durchzuführen. Die Steuer- und/oder Regeleinheit 18 ist dazu vorgesehen, optimale, insbesondere kürzeste und/oder mit einem einfachsten Bewegungsablauf versehene, Bewegungsbahnen für die Greifereinheit 30 zum Anfahren wenigstens eines unbelegten Halteplatzes 32 zu ermitteln. Die Steuer- und/oder Regeleinheit 18 ist dazu vorgesehen, die ermittelten optimalen Bewegungsbahnen an eine Ansteuerung der Greifereinheit 30 auszugeben. Die Steuer- und/oder Regeleinheit 18 ist dazu vorgesehen, mittels der Koordinatenerkennung eine Belegungssituation von Halteplätzen 32 der Werkzeug- und/oder Werkzeugfutterpaletten 24 zu ermitteln. Die Steuer- und/oder Regeleinheit 18, insbesondere der trainierte Algorithmus maschinellen Lernens der Steuer- und/oder Regeleinheit 18, ist dazu vorgesehen, zumindest anhand der Kameraaufnahmen und/oder der weiteren Kameraaufnahmen zumindest eine Anwesenheit eines Bedieners zu erkennen Die Steuer- und/oder Regeleinheit 18, insbesondere der trainierte Algorithmus maschinellen Lernens der Steuer- und/oder Regeleinheit 18, ist dazu vorgesehen, zumindest anhand der Kameraaufnahmen und/oder der weiteren Kameraaufnahmen Ortskoordinaten des als anwesend erkannten Bedieners zu ermitteln.

Das Werkzeug-Einstell- und/oder Werkzeug-Messsystem 16 weist einen weiteren Messsensor 38 auf, welcher verschieden ist von der Kamera 12 und von der weiteren Kamera 34. In der Ausgestaltung der Figur 1 ist der weitere Messsensor 38 als eine Durchlichtkamera des Werkzeug-Einstell- und/oder Werkzeug-Messgeräts 10 ausgebildet. Alternativ oder zusätzlich dazu kann ein weiterer Messsensor 38 auch als ein Lasertriangulationssensor des Werkzeug-Einstell- und/oder Werkzeug-Messgeräts 10, als ein taktiler Taster des Werkzeug-Einstell- und/oder Werkzeug-Messgeräts 10 oder als ein Twip-Sensor des Werkzeug-Einstell- und/oder Werkzeug-Messgeräts 10 ausgebildet sein.

Die Figur 3 zeigt ein schematisches Ablaufdiagramm eines Werkzeug-Einstell- und/oder Werkzeug-Messverfahrens unter Verwendung des Werkzeug-Einstell- und/oder Werkzeug-Messsystems 16. In zumindest einem Verfahrensschritt 44 werden die Kameraaufnahmen erzeugt. In zumindest einem Verfahrensschritt 56 werden von dem weiteren Messsensor 38 Messparameter aufgenommen. In zumindest einem Verfahrensschritt 58 wird von der Steuer- und/oder Regeleinheit 18 zumindest ein von einem Sensormesswert verschiedener Betriebsparameter zumindest einer Komponente des Werkzeug-Einstell- und/oder Werkzeug-Messsystems 16 erfasst. Der von dem Sensormesswert verschiedene erfasste Betriebsparameter kann als ein Stromverbrauch oder eine Leistungsaufnahme der ein (erkanntes) Werkzeug 20, Werkzeugfutter 22 oder Komplettwerkzeug greifenden Greifereinheit 30, der durch die Bewegungen der Greifereinheit 30 erzeugt wird, ausgebildet sein. Der von dem Sensormesswert verschiedene erfasste Betriebsparameter kann ein Stromverbrauch oder eine Leistungsaufnahme der Rotationseinheit 40 des Werkzeug-Einstell- und/oder Werkzeug-Messgeräts 10 sein. In zumindest einem Verfahrensschritt 60 wird die Anwesenheit oder Abwesenheit eines Bedieners in den Kameraaufnahmen und/oder in den weiteren Kameraaufnahmen ermittelt. Bei einer Erkennung einer Anwesenheit des Bedieners werden in dem Verfahrensschritt 60 die Ortskoordinaten des Bedieners ermittelt.

In zumindest einem weiteren Verfahrensschritt 46 werden die Kameraaufnahmen zumindest temporär von der Steuer- und/oder Regeleinheit 18 abgespeichert und ausgewertet. In zumindest einem weiteren Verfahrensschritt 80 wird von dem trainierten Algorithmus maschinellen Lernens anhand der ausgewerteten Kameraaufnahmen die Koordinatenerkennung bewerkstelligt. In dem weiteren Verfahrensschritt 80 können Messparameter des weiteren Messsensors 38 von der Steuer- und/oder Regeleinheit 18 bei der Durchführung der Koordinatenerkennung herangezogen werden. In dem weiteren Verfahrensschritt 80 werden mittels der Koordinatenerkennung zumindest Abmessungen 26 und/oder Positionen 36 der jeweiligen Werkzeuge 20, Werkzeugfutter 22, Komplettwerkzeuge und/oder Werkzeug- und/oder Werkzeugfutterpaletten 24 ermittelt. In einem zusätzlichen weiteren Verfahrensschritt 54 wird eine Plausibilitätsprüfung der in der Koordinatenerkennung ermittelten Informationen durchgeführt. In dem zusätzlichen weiteren Verfahrensschritt 54 können die Messparameter des weiteren Messsensors 38 von der Steuer- und/oder Regeleinheit 18 zu der Plausibilitätsprüfung der in der Koordinatenerkennung ermittelten Daten, wie beispielsweise den Positionen 36 oder den Abmessungen 26, herangezogen werden. In dem zusätzlichen weiteren Verfahrensschritt 54 kann der zumindest eine von dem Sensormesswert verschiedene erfasste Betriebsparameter von der Steuer- und/oder Regeleinheit 18 zu der Plausibilitätsprüfung der in der Koordinatenerkennung ermittelten Daten, wie beispielsweise Abmessungen 26 von Werkzeugen 20, Werkzeugfuttern 22, Komplettwerkzeugen und/oder Werkzeug- und/oder Werkzeugfutterpaletten 24, herangezogen werden. In zumindest einem Verfahrensschritt 62 wird von der Steuer- und/oder Regeleinheit 18 ein Systemparameter des Werkzeug-Einstell- und/oder Werkzeug-Messsystems 16 in Abhängigkeit von der erkannten An- oder Abwesenheit des Bedieners angepasst. In dem Verfahrensschritt 62 wird der Systemparameter in Abhängigkeit von der erkannten Ortskoordinate des anwesenden Bedieners angepasst. Der Systemparameter kann dabei als eine Bewegungsgeschwindigkeit oder als eine Systemkraft einer Komponente des Werkzeug-Einstell- und/oder Werkzeug-Messsystems 16 ausgebildet sein. Die Anpassung des Systemparameters kann als eine Reduzierung der Bewegungsgeschwindigkeit oder der Systemkraft dieser Komponente ausgebildet sein. Beispielsweise wird in dem Verfahrensschritt 62 eine Bewegungsgeschwindigkeit der Rotationseinheit 40, eines Einspannmechanismus der Werkzeug- und/oder Werkzeugfutter-Halteeinheit 42 und/oder der Greifereinheit 30 in Abhängigkeit von der erkannten An- oder Abwesenheit des Bedieners reduziert.

In zumindest einem weiteren Verfahrensschritt 64 werden von dem trainierten Algorithmus maschinellen Lernens der Steuer- und/oder Regeleinheit 18 oder von einem weiteren entsprechend trainierten Algorithmus maschinellen Lernens der Steuer- und/oder Regeleinheit 18 aus den Kameraaufnahmen und/oder den weiteren Kameraaufnahmen innerhalb des Werkzeug-Einstell- und/oder Werkzeug-Messsystems 16 angeordnete Greifereinheit-Einlern-Markierungen 70 erkannt. Die Greifereinheit-Einlern-Markierungen 70 sind zu einer Festlegung von Grenzen des Bewegungsbereichs der Greifereinheit 30 vorgesehen. In der Figur 1 ist der Übersichtlichkeit halber nur eine von mehreren Greifereinheit-Einlern-Markierung 70 beispielhaft und schematisch eingezeichnet. In zumindest einem weiteren Verfahrensschritt 66 führt der Handhabungs-Industrieroboter 28 eine Referenzfahrt mit den Positionen der erkannten Greifereinheit-Einlern-Markierungen 70 als Referenzpositionen selbsttätig durch. In zumindest einem weiteren Verfahrensschritt 68 werden die Koordinaten der Referenzfahrt als Numerical-Control-Daten für einen zukünftigen Betrieb des Handhabungs-Industrieroboters 28, vorzugsweise in dem fixen Koordinatensystem, abgespeichert.

In zumindest einem Verfahrensschritt 72 wird eine Position der Greifereinheit 30 und eine erkannte Position 36 einer Werkzeug- und/oder Werkzeugfutterpalette 24 mit Numerical-Control-Daten einer Ansteuerung der Greifereinheit 30 abgeglichen. In dem Verfahrensschritt 72 werden die Positionsdaten der erkannten Position 36 der Werkzeug- und/oder Werkzeugfutterpalette 24 in Numerical-Control-Daten der Ansteuerung der Greifereinheit 30 transformiert. In zumindest einem Verfahrensschritt 78 wird mittels der Koordinatenerkennung eine Belegungssituation von Halteplätzen 32 der Werkzeug- und/oder Werkzeugfutterpaletten 24 ermittelt. In zumindest einem Verfahrensschritt 74 wird mittels der Koordinatenerkennung eine Kollisionsprüfung anhand der Ermittlung der Relativpositionierungen der in den Kameraaufnahmen erkannten Werkzeug- und/oder Werkzeugfutterpaletten 24 und aller von der Greifereinheit 30 zur Bestückung von als unbelegt erkannten Halteplätzen 32 der erkannten Werkzeug- und/oder Werkzeugfutterpaletten 24 anzufahrenden Positionen durchgeführt. In zumindest einem Verfahrensschritt 76 werden die optimalen Bewegungsbahnen für die Greifereinheit 30 zum Anfahren der unbelegten Halteplätze 32 ermittelt und an eine Ansteuerung der Greifereinheit 30 ausgegeben.

### Bezugszeichen

- 10: Werkzeug-Einstell- und/oder Werkzeug-Messgerät
- 12: Kamera
- 14: Werkzeug-Einstell- und/oder Werkzeug-Messbereich
- 16: Werkzeug-Einstell- und/oder Werkzeug-Messsystem
- 18: Steuer- und/oder Regeleinheit
- 20: Werkzeug
- 22: Werkzeugfutter
- 24: Werkzeug- und/oder Werkzeugfutterpalette
- 26: Abmessung
- 28: Handhabungs-Industrieroboter
- 30: Greifereinheit
- 32: Halteplatz
- 34: Weitere Kamera
- 36: Position
- 38: Weiterer Messsensor
- 40: Rotationseinheit
- 42: Werkzeug- und/oder Werkzeugfutter-Halteeinheit
- 44: Verfahrensschritt
- 46: Verfahrensschritt
- 48: Werkzeug-Einlager-Bereich
- 50: Werkzeug-Auslager-Bereich
- 52: Werkzeug-Zwischenlager-Bereich
- 54: Verfahrensschritt
- 56: Verfahrensschritt
- 58: Verfahrensschritt
- 60: Verfahrensschritt
- 62: Verfahrensschritt
- 64: Verfahrensschritt
- 66: Verfahrensschritt
- 68: Verfahrensschritt
- 70: Greifereinheit-Einlern-Markierungen
- 72: Verfahrensschritt
- 74: Verfahrensschritt
- 76: Verfahrensschritt
- 78: Verfahrensschritt
- 80: Verfahrensschritt

## Patentansprüche

1. Werkzeug-Einstell- und/oder Werkzeug-Messsystem (16), mit einem optischen Werkzeug-Einstell- und/oder Werkzeug-Messgerät (10), mit zumindest einer Kamera (12), welche zumindest dazu vorgesehen ist, Kameraaufnahmen von einem Werkzeug-Einstell- und/oder Werkzeug-Messbereich (14) des Werkzeug-Einstell- und/oder Werkzeug-Messgeräts (10) und/oder von einem Werkzeug-Einlager- (48), Werkzeug-Auslager-(50) oder Werkzeug-Zwischenlager-Bereich (52) des Werkzeug-Einstell- und/oder Werkzeug-Messsystems (16) aufzunehmen, und mit einer, insbesondere externen oder internen, Steuer- und/oder Regeleinheit (18), welche zumindest dazu vorgesehen ist, die Kameraaufnahmen zumindest temporär abzuspeichern und auszuwerten, **dadurch gekennzeichnet, dass** die Steuer- und/oder Regeleinheit (18) einen trainierten Algorithmus maschinellen Lernens umfasst, welcher zumindest dazu vorgesehen ist, anhand der ausgewerteten Kameraaufnahmen eine Koordinatenerkennung zu bewerkstelligen, welche eine Erkennung von Werkzeugen (20), Werkzeugfuttern (22), Komplettwerkzeugen und/oder Werkzeug- und/oder Werkzeugfutterpaletten (24) und eine Bestimmung derer Koordinaten in einem fixen Koordinatensystem umfasst.

2. Werkzeug-Einstell- und/oder Werkzeug-Messsystem (16) nach Anspruch 1, **dadurch gekennzeichnet, dass** die Kamera (12) eine Messkamera, insbesondere Auflichtmesskamera, des Werkzeug-Einstell- und/oder Werkzeug-Messgeräts (10) ist.

3. Werkzeug-Einstell- und/oder Werkzeug-Messsystem (16) nach Anspruch 1 oder 2, **dadurch gekennzeichnet, dass** der trainierte Algorithmus maschinellen Lernens ein CNN (Convolutional Neural Network)-Algorithmus ist.

4. Werkzeug-Einstell- und/oder Werkzeug-Messsystem (16) nach einem der vorhergehenden Ansprüche, **dadurch gekennzeichnet, dass** die Steuer- und/oder Regeleinheit (18) dazu vorgesehen ist, mittels der Koordinatenerkennung zumindest eine Abmessung (26) der jeweiligen Werkzeuge (20), Werkzeugfutter (22), Komplettwerkzeuge und/oder Werkzeug- und/oder Werkzeugfutterpaletten (24) zu ermitteln.

5. Werkzeug-Einstell- und/oder Werkzeug-Messsystem (16) nach einem der vorhergehenden Ansprüche, **dadurch gekennzeichnet, dass** die Steuer- und/oder Regeleinheit (18) dazu vorgesehen ist, mittels der Koordinatenerkennung zumindest eine Position (36) der jeweiligen Werkzeuge (20), Werkzeugfutter (22), Komplettwerkzeuge und/oder Werkzeug- und/oder Werkzeugfutterpaletten (24) zu ermitteln.

6. Werkzeug-Einstell- und/oder Werkzeug-Messsystem (16) nach einem der vorhergehenden Ansprüche, **gekennzeichnet durch** einen Handhabungs-Industrieroboter (28) mit zumindest einer Greifereinheit (30) zu einem Greifen und/oder Bewegen von Werkzeugen (20), Werkzeugfuttern (22) und/oder Komplettwerkzeugen.

7. Werkzeug-Einstell- und/oder Werkzeug-Messsystem (16) zumindest nach den Ansprüchen 5 und 6, **dadurch gekennzeichnet, dass** die Steuer- und/oder Regeleinheit (18) dazu vorgesehen ist, insbesondere mittels der Koordinatenerkennung, zumindest eine Position der Greifereinheit (30) zu ermitteln und zumindest die ermittelten und/oder erkannten Positionen (36) von Werkzeug- und/oder Werkzeugfutterpaletten (24) und Greifereinheit (30) mit Numerical-Control-Daten einer Ansteuerung der Greifereinheit (30) abzugleichen, vorzugsweise Positionsdaten der erkannten Positionen (36) von Werkzeug- und/oder Werkzeugfutterpaletten (24) in Numerical-Control-Daten der Ansteuerung der Greifereinheit (30) zu transformieren.

8. Werkzeug-Einstell- und/oder Werkzeug-Messsystem (16) nach Anspruch 6 oder 7, **dadurch gekennzeichnet, dass** die Kameraaufnahmen zumindest einen Teil eines Bewegungsbereichs der Greifereinheit (30), vorzugsweise einen vollständigen Bewegungsbereich der Greifereinheit (30), umfassen.

9. Werkzeug-Einstell- und/oder Werkzeug-Messsystem (16) nach Anspruch 8, **dadurch gekennzeichnet, dass** der trainierte Algorithmus maschinellen Lernens der Steuer- und/oder Regeleinheit (18) oder ein weiterer entsprechend trainierter Algorithmus maschinellen Lernens der Steuer- und/oder Regeleinheit (18) dazu vorgesehen ist, aus den Kameraaufnahmen innerhalb des Werkzeug-Einstell- und/oder Werkzeug-Messsystems (16) angeordnete Greifereinheit-Einlern-Markierungen (70) zu erkennen, welche zur Festlegung von Grenzen des Bewegungsbereichs der Greifereinheit (30) vorgesehen sind, und welche Referenzpositionen für eine, insbesondere selbsttätig durchgeführte, Referenzfahrt des Handhabungs-Industrieroboter (28) ausbilden.

10. Werkzeug-Einstell- und/oder Werkzeug-Messsystem (16) nach Anspruch 8 oder 9, **dadurch gekennzeichnet, dass** die Steuer- und/oder Regeleinheit (18) dazu vorgesehen ist, mittels der Koordinatenerkennung eine Kollisionsprüfung anhand einer Ermittlung von Relativpositionierungen von in den Kameraaufnahmen erkannten Werkzeug- und/oder Werkzeugfutterpaletten (24) und aller von der Greifereinheit (30) zur Bestückung von Halteplätzen (32), insbesondere von als unbelegt erkannten Halteplätzen (32), der erkannten Werkzeug- und/oder Werkzeugfutterpaletten (24) anzufahrenden Positionen durchzuführen.

11. Werkzeug-Einstell- und/oder Werkzeug-Messsystem (16) nach Anspruch 10, **dadurch gekennzeichnet, dass** die Steuer- und/oder Regeleinheit (18) dazu vorgesehen ist, optimale, insbesondere kürzeste und/oder mit einem einfachsten Bewegungsablauf versehene, Bewegungsbahnen für die Greifereinheit (30) zum Anfahren wenigstens eines unbelegten Halteplatzes (32) zu ermitteln, und insbesondere an eine Ansteuerung der Greifereinheit (30) auszugeben.

12. Werkzeug-Einstell- und/oder Werkzeug-Messsystem (16) nach einem der vorhergehenden Ansprüche, **dadurch gekennzeichnet, dass** die Steuer- und/oder Regeleinheit (18) dazu vorgesehen ist, mittels der Koordinatenerkennung eine Belegungssituation von Halteplätzen (32) der Werkzeug- und/oder Werkzeugfutterpaletten (24) zu ermitteln.

13. Werkzeug-Einstell- und/oder Werkzeug-Messsystem (16) nach einem der vorhergehenden Ansprüche, insbesondere zumindest nach Anspruch 2, **gekennzeichnet durch** zumindest eine weitere Kamera (34), welche zumindest dazu vorgesehen ist, weitere Kameraaufnahmen von dem Werkzeug-Einstell- und/oder Werkzeug-Messbereich (14) des Werkzeug-Einstell- und/oder Werkzeug-Messgeräts (10), von dem Werkzeug-Einlager-, Werkzeug-Auslager- oder Werkzeug-Zwischenlager-Bereich und/oder von zumindest einem Teil eines Bewegungsbereichs der Greifereinheit (30), vorzugsweise einem vollständigen Bewegungsbereich der Greifereinheit (30), aufzunehmen, wobei der trainierte Algorithmus maschinellen Lernens der Steuer- und/oder Regeleinheit (18) dazu vorgesehen ist, die Koordinatenerkennung anhand einer kombinierten Auswertung der Kameraaufnahmen der Kamera (12) und der weiteren Kameraaufnahmen der weiteren Kamera (34) zu bewerkstelligen.

14. Werkzeug-Einstell- und/oder Werkzeug-Messsystem (16) nach einem der vorhergehenden Ansprüche, insbesondere zumindest nach Anspruch 13, **dadurch gekennzeichnet, dass** zumindest ein von der Kamera (12), und insbesondere der weiteren Kamera (34), verschiedener weiterer Messsensor (38) des Werkzeug-Einstell- und/oder Werkzeug-Messgeräts (10) dazu vorgesehen ist, von der Steuer- und/oder Regeleinheit (18) bei der Durchführung der Koordinatenerkennung herangezogen zu werden.

15. Werkzeug-Einstell- und/oder Werkzeug-Messsystem (16) nach einem der vorhergehenden Ansprüche, insbesondere zumindest nach Anspruch 13, **dadurch gekennzeichnet, dass** zumindest ein von der Kamera (12), und insbesondere der weiteren Kamera (34), verschiedener weiterer Messsensor (38) des Werkzeug-Einstell- und/oder Werkzeug-Messgeräts (10) dazu vorgesehen ist, von der Steuer- und/oder Regeleinheit (18) zu einer Plausibilitätsprüfung der in der Koordinatenerkennung ermittelten Daten, wie beispielsweise Positionen (36), Abmessungen (26), etc., herangezogen zu werden.

16. Werkzeug-Einstell- und/oder Werkzeug-Messsystem (16) nach Anspruch 14 oder 15, **dadurch gekennzeichnet, dass** der weitere Messsensor (38) ein Lasertriangulationssensor des Werkzeug-Einstell- und/oder Werkzeug-Messgeräts (10), ein taktiler Taster des Werkzeug-Einstell- und/oder Werkzeug-Messgeräts (10), ein Twip-Sensor des Werkzeug-Einstell- und/oder Werkzeug-Messgeräts (10) oder eine Durchlichtkamera des Werkzeug-Einstell- und/oder Werkzeug-Messgeräts (10) ist.

17. Werkzeug-Einstell- und/oder Werkzeug-Messsystem (16) nach einem der vorhergehenden Ansprüche, **dadurch gekennzeichnet, dass** zumindest ein weiterer von einem Sensormesswert verschiedener Betriebsparameter einer Komponente des Werkzeug-Einstell- und/oder Werkzeug-Messsystems (16), beispielsweise ein Stromverbrauch einer Greifereinheit (30) des Werkzeug-Einstell- und/oder Werkzeug-Messsystems (16) oder einer Rotationseinheit (40) des Werkzeug-Einstell- und/oder Werkzeug-Messgeräts (10), dazu vorgesehen ist, von der Steuer- und/oder Regeleinheit (18) zu einer Plausibilitätsprüfung der in der Koordinatenerkennung ermittelten Daten, wie beispielsweise Abmessungen (26) von Werkzeugen (20), Werkzeugfuttern (22), Komplettwerkzeugen und/oder Werkzeug- und/oder Werkzeugfutterpaletten (24), herangezogen zu werden.

18. Werkzeug-Einstell- und/oder Werkzeug-Messsystem (16) nach einem der vorhergehenden Ansprüche, **dadurch gekennzeichnet, dass** die Steuer- und/oder Regeleinheit (18), insbesondere der trainierte Algorithmus maschinellen Lernens der Steuer- und/oder Regeleinheit (18), dazu vorgesehen ist, zumindest anhand der Kameraaufnahmen zumindest eine Anwesenheit eines Bedieners zu erkennen, und vorzugsweise Ortskoordinaten des Bedieners zu ermitteln.

19. Werkzeug-Einstell- und/oder Werkzeug-Messsystem (16) nach Anspruch 18, **dadurch gekennzeichnet, dass** die Steuer- und/oder Regeleinheit (18) oder eine weitere Steuereinheit des Werkzeug-Einstell- und/oder Werkzeug-Messsystems (16) dazu vorgesehen ist, einen Systemparameter, insbesondere eine Bewegungsgeschwindigkeit zumindest einer Komponente des Werkzeug-Einstell- und/oder Werkzeug-Messsystems (16), wie beispielsweise einer Rotationseinheit (40) des Werkzeug-Einstell- und/oder Werkzeug-Messgeräts (10), eines Einspannmechanismus einer Werkzeug- und/oder Werkzeugfutter-Halteeinheit (42) des Werkzeug-Einstell- und/oder Werkzeug-Messgeräts (10) oder einer Greifereinheit (30) des Werkzeug-Einstell- und/oder Werkzeug-Messsystems (16), in Abhängigkeit von der erkannten An- oder Abwesenheit des Bedieners, insbesondere in Abhängigkeit von einer erkannten Ortskoordinate eines anwesenden Bedieners, anzupassen.

20. Werkzeug-Einstell- und/oder Werkzeug-Messverfahren, insbesondere mittels eines Werkzeug-Einstell- und/oder Werkzeug-Messsystems (16) nach einem der Ansprüche 1 bis 19, wobei in zumindest einem Verfahrensschritt (44) eine Kamera (12), insbesondere eines optischen Werkzeug-Einstell- und/oder Werkzeug-Messgeräts (10), Kameraaufnahmen von einem Werkzeug-Einstell- und/oder Werkzeug-Messbereich (14) des Werkzeug-Einstell- und/oder Werkzeug-Messgeräts (10) und/oder von einem Werkzeug-Einlager-, Werkzeug-Auslager- oder Werkzeug-Zwischenlager-Bereich aufnimmt und wobei in zumindest einem weiteren Verfahrensschritt (46) die Kameraaufnahmen zumindest temporär von einer Steuer- und/oder Regeleinheit (18) abgespeichert und ausgewertet werden, **dadurch gekennzeichnet, dass** in zumindest einem weiteren Verfahrensschritt (80) von einem trainierten Algorithmus maschinellen Lernens anhand der ausgewerteten Kameraaufnahmen eine Koordinatenerkennung bewerkstelligt wird, welche eine Erkennung von Werkzeugen (20), Werkzeugfuttern (22), Komplettwerkzeugen und/oder Werkzeug- und/oder Werkzeugfutterpaletten (24) und eine Bestimmung derer Koordinaten in einem fixen Koordinatensystem umfasst.

21. Computerprogrammprodukt und/oder Computerprogramm-Recheninfrastruktur, umfassend Befehle, die bei einer Ausführung des Computerprogramms durch eine Recheneinheit, vorzugsweise eine Steuer- und/oder Regeleinheit (18) eines Werkzeug-Einstell- und/oder Werkzeug-Messsystems (16) nach einem der Ansprüche 1 bis 19, diese veranlassen, die die Ausführung des trainierten Algorithmus maschinellen Lernens umfassenden Schritte des Werkzeugidentifikationsverfahrens nach Anspruch 20 auszuführen.

22. Steuer- und/oder Regeleinheit (18) für ein Werkzeug-Einstell- und/oder Werkzeug-Messsystem (16) nach einem der Ansprüche 1 bis 19, umfassend ein Computerprogrammprodukt nach dem Anspruch 21.
